Europäisches Patentamt

European Patent Office

Office européen des brevets

(19)

(11) Veröffentlichungsnummer: **0 271 477**
A1

## EUROPÄISCHE PATENTANMELDUNG

(12)

(21) Anmeldenummer: 87890266.7

(22) Anmeldetag: 20.11.87

(51) Int. Cl.⁴: **C 10 J 3/66**
C 10 B 53/00

(30) Priorität: 26.11.86 AT 3159/86

(43) Veröffentlichungstag der Anmeldung:
15.06.88 Patentblatt 88/24

(84) Benannte Vertragsstaaten:
BE CH DE ES FR GB GR IT Li LU NL SE

(71) Anmelder: **VOEST-ALPINE Aktiengesellschaft**
**Turmstrasse 44**
**A-4020 Linz  (AT)**

(72) Erfinder: **Hutterer, Harald, Dipl.-Ing. Dr.**
**Hietzinger Hauptstrasse 3/10**
**A-1130 Wien  (AT)**

(74) Vertreter: **Kretschmer, Adolf, Dipl.-Ing. et al**
**Patentanwälte Dipl.Ing. A. Kretschmer Dr. Thomas M.**
**Haffner Schottengasse 3a**
**A-1014 Wien  (AT)**

(54) **Vorrichtung zur Ent- und Vergasung von festen Brennstoffen.**

(57) Die Erfindung betrifft eine Vorrichtung zur Ent- und Vergasung von festen Brennstoffen, insbesondere für Brennstoffe aus Müll und brennbaren Abfällen. Die Vorrichtung besteht aus einem Reaktor (3), in welchem unter Verwendung von heißen Rauchgasen die End- und Vergasung erfolgt. Der Reaktor (3) weist einen in die Brennkammer (4) reiohenden Förderrost (2) auf. Der Reaktor (3) ist von der Brennkammer (4) durch eine oberhalb des Förderrostes (2) endende Wand (14) getrennt. Die aus der Brennkammer (4) abgezogenen Rauchgase werden dem Reaktor (3) vorzugsweise unter Zwischenschaltung eines Gebläses (11) rückgeführt. Der Produktgasabzug (18) ist an den Reaktor (3) angeschlossen.

FIG. 1

EP 0 271 477 A1

Bundesdruckerei Berlin

**Beschreibung**

Vorrichtung zur Ent- und Vergasung von festen Brennstoffen

Die Erfindung bezieht sich auf eine Vorrichtung zur Ent- und Vergasung von festen Brennstoffen, insbesondere Brennstoff aus Müll und brennbaren Abfällen, bestehend aus einem Reaktor, in welchem unter Verwendung von heißen Rauchgasen die Ent- und Vergasung erfolgt, und einer Brennkammer.

Aus der WO 86/00634 ist bereits bekannt geworden, die Vergasung von Abfällen in einem Reaktor vorzunehmen, welcher zwei konzentrische Kammern aufweist, wobei in der äußeren Kammer eine Pyrolyse und in der inneren Kammer eine Verbrennung des pyrolisierten Materials vorgenommen wird. In den beiden Kammern wird ein Fließbett aufrechterhalten und der Transport von der äußeren Kammer in die innere Kammer erfolgt durch Regelung der Gasströme, aus welchen scheinbare Dichteunterschiede in den beiden Kammern resultieren.

Auf Grund der Aufrechterhaltung eines Fließbettes ist vor der Materialaufgabe für eine entsprechende Vorbereitung des zu chargierenden Materials zu sorgen und es werden bei der bekannten Einrichtung Blähtonkügelchen zugesetzt um die Fließbetteigenschaften zu unterstützen.

Die Erfindung zielt nun darauf ab, eine Einrichtung der eingangs genannten Art zu schaffen, bei welcher eine möglichst vollständige Umsetzung der Feststoffe ohne aufwendige Vorbereitungsschritte unter Herstellung eines Nutzgases bei möglichst geringem Energieaufwand für eine Stützfeuerung ermöglicht wird. Zur Lösung dieser Aufgabe besteht die Erfindung ausgehend von einer Einrichtung der eingangs genannten Art im wesentlichen darin, daß der Reaktor einen in die Brennkammer reichenden Förderrost aufweist, daß der Reaktor von der Brennkammer durch eine oberhalb des Förderrostes endende Wand getrennt ist, daß die Rauchgase der Brennkammer dem Reaktor, vorzugsweise unter Zwischenschaltung eines Gebläses, rückgeführt sind und daß der Produktgasabzug an den Reaktor angeschlossen ist. Dadurch, daß ein Förderrost Verwendung findet, kann eine zeitlich exakt regelbare Verweilzeit des zu ent- bzw. vergasenden Materials im Reaktor bzw. in der Brennkammer sichergestellt werden und der durch den Förderrost bewirkte Transport der Feststoffe erlaubt es auch, Materialien einzusetzen, welche für die Aufrechterhaltung eines Fließbettes ungeeignet sind. Selbst feuchte und zu Klumpenbildung neigende Teilchen können mittels eines derartigen Förderrostes sicher vom Reaktor in die Brennkammer übergeführt werden und dadurch, daß Reaktor und Brennkammer lediglich durch eine oberhalb des Förderrostes endende Wand getrennt sind, lassen sich kompakte Baumaße erzielen. Dadurch, daß nun die aus der Brennkammer abgezogenen Rauchgase in den Reaktor rückgeführt werden, läßt sich auch hier die Energiebilanz wesentlich verbessern, wobei diese Rauchgase durch ihre fühlbare Wärme und durch ihren Gehalt an Restsauerstoff eine Umsetzung des Brennmaterials zu einem Produktgas bewirken und teilweise als Trägergas dienen. Die Verwendung eines Förderrostes erlaubt es auch die Rauchgase in besonders einfacher Weise in den Reaktor rückzuführen, wobei mit Vorteil der Anschluß für die Rauchgase unterhalb des Förderrostes in den Reaktor mündet.

Die Energiebilanz läßt sich auch dadurch noch weiter verbessern, daß der Reaktor und die Brennkammer von einem gemeinsamen Mantel umschlossen sind, wobei vorzugsweise der Mantel wenigstens teilweise doppelwandig ausgebildet ist und Kanäle für die Vorwärmung von Verbrennungsluft aufweist.

Eine besonders einfache Konstruktion der Transportvorrichtung für das umzusetzende Material kann dadurch erzielt werden, daß der Förderrost als stufenförmiger Planrost ausgebildet ist, dessen Elemente in Förderrichtung hin und hergehend antreibbar sind, wobei der Transport zur Verbrennungskammer noch dadurch unterstützt werden kann, daß der Förderrost in Förderrichtung stufenförmig abfallend ausgebildet ist. Alternativ ist es ohne weiteres möglich den Förderrost als Walzenrost auszubilden. Die Verbrennungsabgase bzw. Rauchgase der Brennkammer befinden sich auf relativ hohen Temperaturen und es kann wünschenswert sein, diese Temperatur vor der Rückführung in den Reaktor abzusenken. Zu dem Zweck ist mit Vorteil die Ausbildung so getroffen, daß die Verbrennungsabgase bzw. Rauchgase vor der Rückführung zum Reaktor über einen Wärmetauscher geführt sind. Auf diese Weise kann mit den heißen Rauchgasen Sekundärenergie erzeugt werden.

Um die jeweilige Umsetzungszeit im Reaktor und in der Brennkammer optimal zu steuern, ist mit Vorteil der Antrieb des Förderrostes regelbar ausgebildet.

Das Produktgas wird bei der erfindungsgemäßen Vorrichtung am Reaktor abgezogen und um ein besonders hochwertiges Produktgas zu erzielen, ist mit Vorteil die Ausbildung so getroffen, daß an den Reaktor in der Produktgasabzugsleitung ein Spaltreaktor angeschlossen ist. Auf diese Weise wird das Rauchgas beim Durchtritt durch das umzusetzende Material mit flüchtigen Anteilen und Vergasungsprodukten angereichert. Die Umsetzung in einem nachfolgenden Spaltreaktor, welcher beispielsweise mit einer Schicht aus glühendem Koks beschickt sein kann, führt zu einer Spaltung von höhermolekularen Anteilen, wodurch ein relativ hochwertiges Produktgas erzielt werden kann. Mit Vorteil ist die Anordnung hiebei so getroffen, daß der Spaltreaktor eine Schüttung aus glühendem Koks enthält und einen Austrag für Asche in den darunterliegenden Entgasungsreaktor aufweist, wodurch es möglich ist, die anfallende Koksasche über den darunterliegenden Reaktor der zentralen Entaschungseinrichtung zuzuführen.

Der Reaktor kann mit einer vorzugsweise regelbaren Beschickungseinrichtung, insbesondere einer Förderschnecke ausgestaltet sein um beliebige umzusetzende Materialien einbringen zu können.

Die Aschenaustragsvorrichtung ist naturgemäß in der Brennkammer vorzusehen und mit Vorteil ist hiebei die Ausbildung so getroffen, daß an das Ende des Förderrostes in der Brennkammer eine Aschenaustragseinrichtung, insbesondere ein Aschesammelkanal mit einer Austragschnecke, angeschlossen ist.

Die die Brennkammer verlassenden Verbrennungsabgase bzw. Rauchgase können einen relativ hohen Anteil an Flugasche mit sich reißen und es ist mit Vorteil unterhalb des Wärmetauschers im Rauchgasabzug eine Absetzkammer für Flugasche angeordnet.

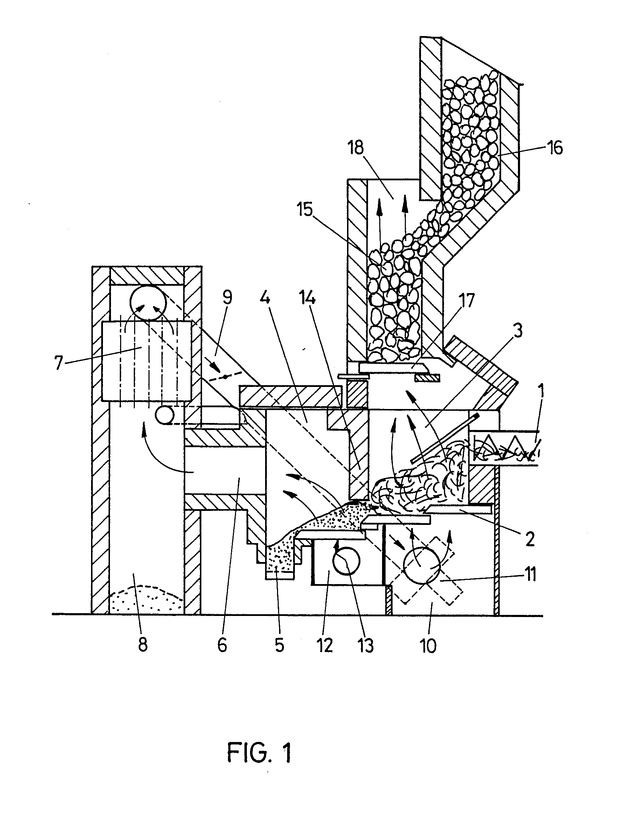

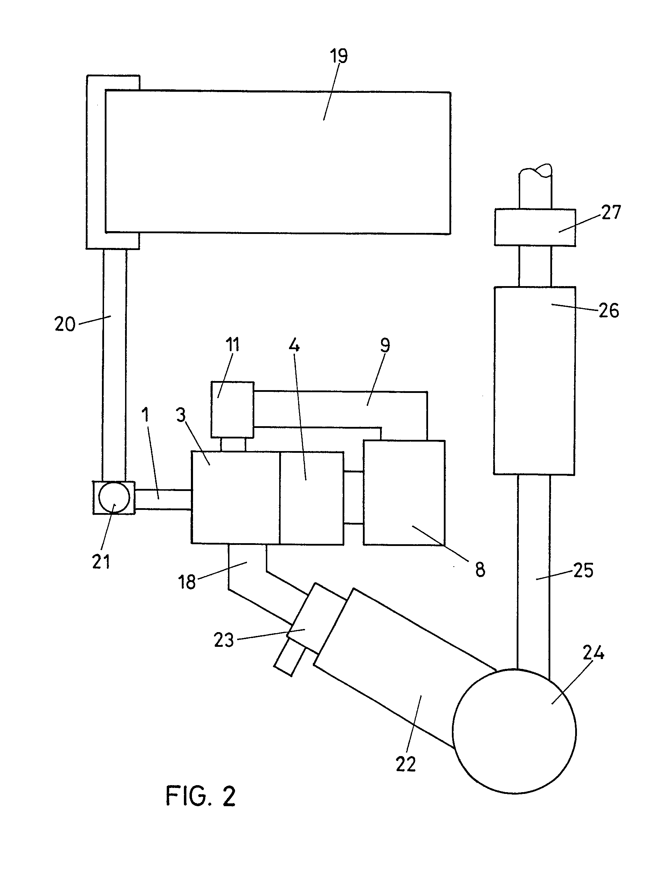

Die Erfindung wird nachfolgend an Hand eines in der Zeichnung dargestellten Ausführungsbeispieles näher erläutert. In dieser zeigen Fig.1 die Vorrichtung zur Ent- und Vergasung teilweise im Schnitt und Fig.2 eine Anordnung einer Vorrichtung nach Fig.1 in einer Gesamtanlage.

In Fig.1 ist eine Förderschnecke 1 zur Beschikkung von zu entgasendem und zu vergasendem Material vorgesehen, durch welche das zu chargierende Material auf einen Förderrost 2 aufgebracht wird. Der Förderrost 2 erstreckt sich über den gesamten Boden eines Reaktors 3, bis in eine Brennkammer 4. Am Ende des Förderrostes 2 ist eine Aschesammelkammer 5 vorgesehen, aus welcher die gebildete Asche über Fördereinrichtungen wie beispielsweise Förderschnecken ausgetragen werden kann. Die Verbrennungsabgase der Brennkammer 4 gelangen durch einen Kamin 6 zu einem Wärmetauscher 7. Unterhalb des Wärmetauschers 7 ist eine Flugaschesammelkammer 8 vorgesehen. Das abgezogene Rauchgas gelangt über eine Rückführungsleitung 9 zurück zum Reaktor 3, wobei der Anschluß für die Rauchgase unterhalb des Förderrostes 2 angeordnet ist. In dem Raum 10 unterhalb des Förderrostes 2 im Bereich des Reaktors 3 ist hiebei auch ein Rauchgasgebläse 11 angeordnet über welches die heißen Rauchgase in den Reaktor gedrückt werden.

Der Raum 10 unterhalb des Förderrostes 2 im Bereich des Reaktors ist ebenso wie der Raum 12 unterhalb des Förderrostes 2 im Bereich der Brennkammer als Aschekasten ausgebildet und im Aschekasten 12 mündet eine Zuführung 13 für vorgewärmte Verbrennungsluft.

Das mit den heißen Rauchgasen beaufschlagte Material unterliegt im Bereich des Reaktors 3 einem starken Volumsverlust und eine Trennwand 14 zwischen dem Reaktor 3 und der Brennkammer 4 reicht aus diesem Grunde bis knapp über den Förderrost 2 um einen Abschluß sicherzustellen. Die zur Umsetzung des aufgegebenen Materials eingesetzten Rauchgase durchströmen das aufgegebene Material im Bereich des Reaktors und gelangen in der Folge in einen in den Produktgasabzug eingeschalteten Spaltreaktor 15, welcher mit einem Bett aus glühendem Koks gefüllt wird. Der Nachfüllschacht für den Koks ist mit 16 bezeichnet. Die aus dem Koks anfallende Asche kann durch Bewegen des Rostes 17 unmittelbar in den darunterliegenden Reaktor 3 übergeführt werden und gelangt mit dem zur Verbrennung geführten Material in die Brennkammer 4. Das Prozeßgas aus welchem hochmolekulare Produkte durch Umsetzung im Spaltreaktor 15 entfernt wurden, kann über den Abzug 18 abgeführt werden.

In den Spaltreaktor können je nach Art des entstandenen Produktgases auch Sauerstoff bzw. Luft eingesaugt werden, um ein möglichst hochwertiges Produktgas zu erzielen.

Bei der Darstellung nach Fig.2 ist ein Beispiel einer Gesamtanlage ohne Spaltreaktor ersichtlich, wobei der Reaktor wiederum mit 3 und die Brennkammer mit 4 bezeichnet ist. Die Zufuhr von Brennstoff von einem Brennstoffvorrat 19 erfolgt über eine erste Förderschnecke 20 und über eine Zellenradschleuse 21 an welche die Förderschnecke 1 des Reaktors 3 anschließt. Das aus dem Entgasungsreaktor 3 abgezogene Produktgas gelangt über den Abzug 18 zu einem Feuerraum 22, welchem ein Brenner 23 mit Verbrennungsluftgebläse vorgeschaltet ist. Die bei der Verbrennung gewonnene Energie wird zur Erzeugung von Sekundärenergie in einem Kessel 24 verwendet, worauf die bei dieser Verbrennung der Prozeßabgase entstehenden Rauchgase über einen Rauchgasabzug 25 zu einem Gaswäscher 26 und erforderlichenfalls über ein Gebläse 27 zu einem Kamin transportiert werden.

## Patentansprüche

1. Vorrichtung zur Ent- und Vergasung von festen Brennstoffen, insbesondere Brennstoff aus Müll und brennbaren Abfällen, bestehend aus einem Reaktor, in welchem unter Verwendung von heißen Rauchgasen die Ent- und Vergasung erfolgt, und einer Brennkammer, dadurch gekennzeichnet, daß der Reaktor (3) einen in die Brennkammer (4) reichenden Förderrost (2) aufweist, daß der Reaktor (3) von der Brennkammer (4) durch eine oberhalb des Förderrostes (2) endende Wand (14) getrennt ist, daß die Rauchgase der Brennkammer (4) dem Reaktor (3), vorzugsweise unter Zwischenschaltung eines Gebläses (11), rückgeführt sind und daß der Produktgasabzug (18) an den Reaktor (3) angeschlossen ist.

2. Vorrichtung nach Anspruch 1, dadurch gekennzeichnet, daß der Reaktor (3) und die Brennkammer (4) von einem gemeinsamen Mantel umschlossen sind.

3. Vorrichtung nach Anspruch 2, dadurch gekennzeichnet, daß der Mantel wenigstens teilweise doppelwandig ausgebildet ist und Kanäle für die Vorwärmung von Verbrennungsluft aufweist.

4. Vorrichtung nach Anspruch 1, 2 oder 3, dadurch gekennzeichnet, daß die Verbrennungsabgase bzw. Rauchgase vor der Rückführung zum Reaktor (3) über einen Wärmetauscher (7) geführt sind.

5. Vorrichtung nach einem der Ansprüche 1 bis 4, dadurch gekennzeichnet, daß der Anschluß für die Rauchgase und/oder Verbrennungsgase unterhalb des Förderrostes (2) mündet.

6. Vorrichtung nach einem der Ansprüche 1 bis 5, dadurch gekennzeichnet, daß der Förderrost (2) als stufenförmiger Planrost ausgebildet ist, dessen Elemente in Förderrichtung hin und hergehend antreibbar sind.

7. Vorrichtung nach einem der Ansprüche 1 bis 6, dadurch gekennzeichnet, daß der Förderrost (2) in Förderrichtung stufenförmig abfallend ausgebildet ist.

8. Vorrichtung nach einem der Ansprüche 1 bis 7, dadurch gekennzeichnet, daß der Förderrost (2) von einem Walzenrost gebildet ist.

9. Vorrichtung nach einem der Ansprüche 1 bis 8, dadurch gekennzeichnet, daß der Antrieb des Förderrostes (2) regelbar ausgebildet ist.

10. Vorrichtung nach einem der Ansprüche 1 bis 9, dadurch gekennzeichnet, daß an den Reaktor (3) in der Produktgasabzugsleitung (18) ein Spaltreaktor (15) angeschlossen ist, in welchem höhermolekulare Anteile der Produktgase thermisch gespalten werden.

11. Vorrichtung nach Anspruch 10, dadurch gekennzeichnet, daß der Spaltreaktor (15) eine Schüttung aus glühendem Koks enthält und einen Austrag (17) für Asche in den darunterliegenden Reaktor (3) aufweist.

12. Vorrichtung nach einem der Ansprüche 1 bis 11, dadurch gekennzeichnet, daß der Entgasungsreaktor (3) eine regelbare Beschickungseinrichtung, insbesondere eine Förderschnekke (1) aufweist.

13. Vorrichtung nach einem der Ansprüche 1 bis 12, dadurch gekennzeichnet, daß an das Ende des Förderrostes (2) in der Brennkammer (4) eine Aschenaustragseinrichtung (5), insbesondere ein Aschesammelkanal mit einer Austragschnecke, angeschlossen ist.

14. Vorrichtung nach einem der Ansprüche 1 bis 13, dadurch gekennzeichnet, daß unterhalb des Wärmetauschers (7) im Rauchgasabzug eine Absetzkammer (8) für Flugasche angeordnet ist.

0271477

FIG. 1

0271477

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 946 774  (BRUUN & SOERENSEN) <br> * Ansprüche 1,4; Figur * <br> --- | 1 | C 10 J   3/66 <br> C 10 B  53/00 |
| A | DE-A-3 345 867  (WÄRMETECHNIK Dr. PAULI) <br> * Ansprüche 1-8; Figur * <br> --- | 1-14 | |
| A | WO-A-8 100 112  (KIENER) <br> * Anspruch 1; Figur 1 * <br> ----- | 1 | |
| | | | **RECHERCHIERTE SACHGEBIETE (Int. Cl.4)** <br><br> C 10 J <br> F 23 G <br> C 10 B |

Der vorliegende Recherchenbericht wurde für alle Patentansprüche erstellt

| Recherchenort | Abschlußdatum der Recherche | Prüfer |
|---|---|---|
| DEN HAAG | 01-03-1988 | MEERTENS J. |

EPO FORM 1503 03.82 (P0403)